(19) **Europäisches Patentamt**
**European Patent Office**
**Office européen des brevets**

(11) **EP 3 792 716 B1**

(12) **EUROPÄISCHE PATENTSCHRIFT**

(45) Veröffentlichungstag und Bekanntmachung des Hinweises auf die Patenterteilung:
**09.11.2022 Patentblatt 2022/45**

(21) Anmeldenummer: **19197282.7**

(22) Anmeldetag: **13.09.2019**

(51) Internationale Patentklassifikation (IPC):
**G05B 19/4155** *(2006.01)* **G05B 19/4061** *(2006.01)*

(52) Gemeinsame Patentklassifikation (CPC):
**G05B 19/4061; G05B 19/4155;** G05B 2219/35316;
G05B 2219/35375; G05B 2219/36061

(54) **NUMERISCHE STEUERUNG MIT PUFFERUNG VON LAGESOLLWERTEN**

NUMERICAL CONTROL WITH BUFFERING OF LOAD SETPOINTS

COMMANDE NUMÉRIQUE POURVUE DE MISE EN MÉMOIRE TAMPON DES VALEURS DE CONSIGNE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.03.2021 Patentblatt 2021/11**

(73) Patentinhaber: **Siemens Aktiengesellschaft 80333 München (DE)**

(72) Erfinder:
• **Bretschneider, Jochen**
  **73732 Esslingen (DE)**
• **Graham, Stephen**
  **74343 Sachsenheim (DE)**
• **Mihatsch, Steffen**
  **71272 Renningen (DE)**
• **Schiffer, Peter**
  **71101 Schönaich (DE)**

(56) Entgegenhaltungen:
**EP-A1- 1 901 150 EP-A1- 2 919 081**

EP 3 792 716 B1

**Beschreibung**

Die vorliegende Erfindung geht aus von einem Betriebsverfahren für eine numerische Steuerung, wobei die numerische Steuerung ein Systemprogramm abarbeitet, wobei die numerische Steuerung unter Abarbeitung des Systemprogramms

a) unter Verwertung von Vorgaben mindestens eine Gruppe von Lagesollwerten für lagegeregelte Achsen einer von der numerischen Steuerung gesteuerten Produktionsmaschine ermittelt, wobei die Vorgaben sowohl der numerischen Steuerung vorab bekannte, insbesondere durch Befehlssätze eines Teileprogrammes definierte Vorgaben als auch externe, der numerischen Steuerung vorab nicht bekannte Echtzeitereignisse umfassen,

b) prüft, ob beim Ansteuern der lagegeregelten Achsen mit den ermittelten Gruppen von Lagesollwerten die Gefahr einer Kollision mindestens eines durch das Ansteuern der lagegeregelten Achsen bewegten Elements mit mindestens einem anderen Element besteht,

c) dann, wenn keine Gefahr einer Kollision besteht, die lagegeregelten Achsen entsprechend den ermittelten Gruppen von Lagesollwerten ansteuert und das Betriebsverfahren mit Schritt a) fortsetzt, so dass das von den lagegeregelten Achsen bewegte Element entlang einer durch die Sequenz der Gruppen von Lagesollwerten definierten Bahn bewegt wird, und

d) dann, wenn die Gefahr einer Kollision besteht, die lagegeregelten Achsen in den Stillstand überführt.

Die vorliegende Erfindung geht weiterhin aus von einem Systemprogramm für eine numerische Steuerung, wobei das Systemprogramm Maschinencode umfasst, der von der numerischen Steuerung abarbeitbar ist, wobei die Abarbeitung des Maschinencodes durch die numerische Steuerung bewirkt, dass die numerische Steuerung ein derartiges Betriebsverfahren ausführt. Die vorliegende Erfindung geht weiterhin aus von einer numerischen Steuerung, wobei die numerische Steuerung mit einem derartigen Systemprogramm programmiert ist, so dass die numerische Steuerung ein derartiges Betriebsverfahren ausführt.

Die vorliegende Erfindung geht weiterhin aus von einer Produktionsmaschine,

- wobei die Produktionsmaschine mehrere lagegeregelte Achsen aufweist, mittels derer ein Element der Produktionsmaschine verfahrbar ist,
- wobei die Produktionsmaschine eine derartige numerische Steuerung aufweist, von der die lagegeregelten Achsen angesteuert werden.

Numerische Steuerungen, die zugehörigen Produktionsmaschinen und die Betriebsweisen für numerische Steuerungen und Produktionsmaschinen sind allgemein bekannt.

Beim Betrieb von Produktionsmaschinen - beispielsweise Werkzeugmaschinen, Robotern oder anderen Bearbeitungsmaschinen - besteht die Gefahr, dass bewegte Elemente der Maschine mit anderen bewegten Elementen oder unbewegten Elementen der Produktionsmaschine kollidieren. Im Falle der Ausgestaltung der Produktionsmaschine als Werkzeugmaschine kann unter Umständen auch ein Kontakt eines Werkzeugs einer Werkzeugmaschine mit dem zu bearbeitenden Werkstück eine Kollision darstellen. Ungewollte Kollisionen können zu Schäden der miteinander kollidierenden Elemente führen, beispielsweise zu einem Abbrechen eines Werkzeugs, einem Verbiegen einer Haltearms, einem Zerkratzen eines Werkstücks und anderen mehr. Oftmals sind derartige Kollisionen auch mit Ausfallzeiten der Produktionsmaschine verbunden.

Der Grund für die Kollision kann verschiedene Ursachen haben. Beispielsweise kann die Produktionsmaschine falsch programmiert worden sein. Auch ist es möglich, dass Elemente manuell unkorrekt montiert wurden, beispielsweise bei einer Werkzeugmaschine ein Werkstück in einer Aufspannung. Eine weitere mögliche Ursache ist ein fehlerhafter manueller Eingriff einer Bedienperson in die Verfahrbewegung.

Zur Vermeidung von Kollisionen sind viele softwaregestützte Systeme bekannt. Sie basieren auf verschiedenen Ansätzen. Die bekannten Systeme sind in der Lage, in einer Vielzahl von Situationen Kollisionen zu vermeiden. Die Systeme des Standes der Technik weisen jedoch insbesondere Mängel bei der Verarbeitung von Echtzeitereignissen auf, welche während der Abarbeitung eines Teileprogramms oder dergleichen sozusagen in letzter Sekunde zu einer unerwarteten, spontanen Bewegung führen können. Ursache für derartige Bewegungen können beispielsweise sogenannte asynchrone Bewegungen, Synchronaktionen, gekoppelte Bewegungen und Benutzereingaben (insbesondere im sogenannten JOG-Modus) sein. Auch andere Ursachen sind möglich.

Im Stand der Technik ist bekannt, derartige Echtzeitereignisse überhaupt nicht zu berücksichtigen. In diesem Fall wird das Risiko, dass ein Echtzeitereignis zu einer Kollision führt, schlichtweg in Kauf genommen.

Im Stand der Technik ist weiterhin bekannt, derartige Echtzeitereignisse dadurch zu berücksichtigen, dass die Elemente der Produktionsmaschine einen Mindestabstand voneinander einhalten müssen. Werden Bewegungen vorgegeben, bei denen der Mindestabstand unterschritten wird, wird entweder die jeweilige Bewegung nicht zugelassen oder es wird zumindest die Verfahrgeschwindigkeit reduziert. Durch diese Vorgehensweise können zwar auch bei Auftreten von Echtzeitereignissen Kollisionen vermieden werden. Diese Lösung weist jedoch den Nachteil auf, dass Bewegungen, die als solche zwar keine Kollision verursachen, bei denen aber der Mindestabstand unterschritten wird, nicht oder zumindest nur mit reduzierter Geschwindigkeit und damit reduzierter Produktivität möglich sind. Die Möglichkeiten der Produktionsmaschine können also, soweit es die Annäherung von Elementen der Produktionsmaschine aneinander oder an andere Elemente betrifft, nicht oder nur mit verringerter Produktivität genutzt werden.

Aus der Druckschrift EP 2 919 081 A1 ist es bekannt, einer numerischen Steuerung einer Bearbeitungsmaschine ein Teileprogramm vorzugeben, das eine Sequenz von Lagesollwerten für ein Werkzeug relativ zu einem zu bearbeitenden Werkstück erzeugt. Die Steuerung ermittelt anhand der Lagesollwerte für auf Maschinenelemente der Bearbeitungsmaschine wirkende lagegeregelte Achsen jeweils einen Achssollwert. Den Maschinenelementen, dem Werkstück und dem Werkzeug sind innerhalb der Steuerung virtuelle Schutzkörper zugeordnet. Die Steuerung ermittelt vor dem Ansteuern der lagegeregelten Achsen Volumina, die von den Schutzkörpern bei Ansteuerung der lagegeregelten Achsen eingenommen würden, und prüft, ob die Schutzkörper hierbei disjunkt voneinander bleiben. Je nach Ergebnis der Prüfung steuert die Steuerung die lagegeregelten Achsen gemäß den Lagesollwerten an oder unterdrückt die Ansteuerung und führt eine Fehlerreaktion aus. Der Steuerung ist ferner ein Lagefehlerfeld bekannt, welches für beliebige Achssollwerte angibt, welche Istlage das Werkzeug relativ zum Werkstück jeweils einnimmt. Die Steuerung berücksichtigt zumindest für einen Teil der Schutzkörper bei der Ermittlung der Volumina, die von den Schutzkörpern bei Ansteuerung der lagegeregelten Achsen eingenommen würden, das Lagefehlerfeld.

Aus der Druckschrift EP 1 901 150 A1 ist eine Vorrichtung zur Vermeidung von Kollisionen zwischen Komponenten eines mehrachsigen Industrieroboters und mindestens einem weiteren Objekt bekannt, wobei die Vorrichtung eine Recheneinheit umfasst, die zum Schätzen der verbleibenden Zeit bis zum Auftreten einer Kollision zwischen dem Roboter und dem Objekt ausgebildet ist. Es wird eine Stoppzeit für den Roboter berechnet und die geschätzte verbleibende Zeit bis zur Kollision mit der Stoppzeit für den Roboter verglichen und ggf. ein Befehl zum Stoppen des Roboters generiert, falls die geschätzte verbleibende Zeit bis zur Kollision nahe der Stoppzeit des Roboters liegt.

Die Aufgabe der vorliegenden Erfindung besteht darin, Möglichkeiten zu schaffen, mittels derer die Produktivität der Produktionsmaschine optimiert werden kann und dennoch auch trotz der Berücksichtigung von Echtzeitereignissen bei der Ermittlung der Lagesollwerte eine Kollision von Elementen der Produktionsmaschine im Betrieb mit an Sicherheit grenzender Wahrscheinlichkeit vermieden werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 4.

Erfindungsgemäß wird ein Betriebsverfahren für eine numerische Steuerung geschaffen, wobei die numerische Steuerung ein Systemprogramm abarbeitet, wobei die numerische Steuerung unter Abarbeitung des Systemprogramms

a) unter Verwertung von Vorgaben mindestens eine Gruppe von Lagesollwerten für lagegeregelte Achsen einer von der numerischen Steuerung gesteuerten Produktionsmaschine ermittelt, wobei die Vorgaben sowohl der numerischen Steuerung vorab bekannte, insbesondere durch Befehlssätze eines Teileprogrammes definierte Vorgaben als auch externe, der numerischen Steuerung vorab nicht bekannte Echtzeitereignisse umfassen,

b) prüft, ob beim Ansteuern der lagegeregelten Achsen mit den ermittelten Gruppen von Lagesollwerten die Gefahr einer Kollision mindestens eines durch das Ansteuern der lagegeregelten Achsen bewegten Elements mit mindestens einem anderen Element besteht,

c) dann, wenn keine Gefahr einer Kollision besteht, die mindestens eine Gruppe von Lagesollwerten in einen Pufferspeicher einspeichert und mindestens eine andere, bereits im Pufferspeicher gespeicherte Gruppe von Lagesollwerten aus dem Pufferspeicher ausliest und die lagegeregelten Achsen entsprechend der mindestens einen aus dem Pufferspeicher ausgelesenen Gruppe von Lagesollwerten ansteuert und das Betriebsverfahren mit Schritt a) fortsetzt, so dass das von den lagegeregelten Achsen bewegte Element entlang einer durch die Sequenz der Gruppen von Lagesollwerten definierten Bahn bewegt wird, und

d) dann, wenn die Gefahr einer Kollision besteht, die lagegeregelten Achsen in den Stillstand überführt,

so dass die numerische Steuerung externe, der numerischen Steuerung vorab nicht bekannte Echtzeitereignisse ausschließlich im Rahmen der Ermittlung der im Pufferspeicher zu speichernden Gruppen von Lagesollwerten berücksichtigt, die im Pufferspeicher gespeicherten Gruppen von Lagesollwerten hingegen nicht mehr ändert, wobei die numerische Steuerung ihre gesamte Betriebsweise getaktet ausführt, wobei mit jedem Zeittakt mindestens eine neue Gruppe von Lagesollwerten in den Pufferspeicher eingespeichert und mindestens eine bereits im Pufferspeicher befindliche Gruppe von Lagesollwerten aus dem Pufferspeicher ausgelesen wird, wobei zwischen einem jeweiligen Einschreibezeitpunkt, zu dem eine jeweilige Gruppe von Lagesollwerten in den Pufferspeicher eingespeichert wird, und einem jeweiligen Auslesezeitpunkt, zu dem dieselbe Gruppe von Lagesollwerten aus dem Pufferspeicher ausgelesen wird, eine Verweildauer, während derer die jeweilige Gruppe von Lagesollwerten im Pufferspeicher gespeichert ist, liegt und

wobei während der Verweildauer im Pufferspeicher die jeweilige Gruppe von Lagesollwerten nicht mehr geändert wird.

Zwischen einem jeweiligen Einschreibezeitpunkt, zu dem eine jeweilige Gruppe von Lagesollwerten in den Pufferspeicher eingespeichert wird, und einem jeweiligen Auslesezeitpunkt, zu dem dieselbe Gruppe von Lagesollwerten aus dem Pufferspeicher ausgelesen wird, liegt somit eine Verweildauer, während derer die jeweilige Gruppe von Lagesollwerten im Pufferspeicher gespeichert ist. Während der Verweildauer im Pufferspeicher wird die jeweilige Gruppe von Lagesollwerten nicht mehr geändert. Anders ausgedrückt: Ein Echtzeitereignis, das der numerischen Steuerung nicht bereits zum Zeitpunkt der Ermittlung der jeweiligen Gruppe von Lagesollwerten bekannt ist, wird für die jeweilige Gruppe von Lagesollwerten und die hierdurch bewirkte Ansteuerung der lagegeregelten Achsen nicht mehr berücksichtigt. Das Echtzeitereignis wirkt erst auf die nächste ermittelte Gruppe von Lagesollwerten. Dadurch erfolgt die tatsächliche Ansteuerung der lagegeregelten Achsen mit Lagesollwerten nur mit Gruppen von Lagesollwerten, für die bereits geprüft wurde, ob die Gefahr einer Kollision besteht. Die Berücksichtigung nur bei den noch nicht in den Pufferspeicher eingespeicherten Lagesollwerten führt somit zwar zu einer geringfügigen Verzögerung bei der Berücksichtigung von Echtzeitereignissen. Diese geringfügige Verzögerung kann aber ohne weiteres hingenommen werden.

Die Echtzeitereignisse, also der numerischen Steuerung vorab nicht bekannten Sachverhalte, können beispielsweise von einer Bedienperson angeforderte Fahrbewegungen, sogenannte asynchrone Bewegungen, Synchronaktionen und dergleichen mehr sein.

Es ist möglich, dass die Verweildauer eine statische Größe ist. In diesem Fall kann die Verweildauer insbesondere unter Berücksichtigung der Dynamik der lagegeregelten Achsen, also der maximal möglichen Verfahrgeschwindigkeiten und der maximal möglichen Beschleunigungen ermittelt werden. Alternativ ist es möglich, dass die numerische Steuerung die Verweildauer in Abhängigkeit von einer Verfahrgeschwindigkeit mindestens einer der lagegeregelten Achsen dynamisch einstellt. In diesem Fall erfolgt also die Einstellung der Verweildauer unter Berücksichtigung der tatsächlichen Verfahrgeschwindigkeiten und der maximal möglichen Beschleunigungen der lagegeregelten Achsen.

Vorzugsweise ist die Verweildauer derart bemessen, dass die numerische Steuerung in der Lage ist, die lagegeregelten Achsen innerhalb der Verweildauer in den Stillstand zu überführen. Es kann in manchen Fällen aber auch akzeptabel sein, die Verweildauer etwas kleiner zu dimensionieren. In diesem Fall ist zwar noch eine Kollision möglich, die Kollision erfolgt aber mit einer bereits reduzierten Geschwindigkeit. Dies kann unter Umständen in Kauf genommen werden.

In vielen Fällen wird es ausreichen, dass die numerische Steuerung dann, wenn die Gefahr einer Kollision besteht, eine unkoordinierte Ansteuerung der lagegeregelten Achsen vornimmt, die lagegeregelten Achsen also einzeln mit ihrer jeweils maximal möglichen Beschleunigung abbremst. Vorzuziehen ist jedoch, dass die numerische Steuerung dann, wenn die Gefahr einer Kollision besteht, die Ansteuerung der lagegeregelten Achsen derart koordiniert, dass das von den lagegeregelten Achsen bewegte Element entlang der durch die Sequenz der bereits im Pufferspeicher gespeicherten Gruppen von Lagesollwerten definierten Bahn in den Stillstand überführt wird. Denn dadurch wird die bereits vorab auf Kollisionsfreiheit geprüfte Bahn auch dann eingehalten, wenn für die neu geprüfte Gruppe von Lagesollwerten die Gefahr einer Kollision erkannt wird und dadurch ein Stoppen der Bewegung ausgelöst wird. Eine Kollision kann damit noch zuverlässiger vermieden werden.

Die Aufgabe wird weiterhin durch ein Systemprogramm mit den Merkmalen des Anspruchs 5 gelöst. Erfindungsgemäß wird ein Systemprogramm der eingangs genannten Art derart ausgestaltet, dass die Abarbeitung des Maschinencodes durch die numerische Steuerung bewirkt, dass die numerische Steuerung ein erfindungsgemäßes Betriebsverfahren ausführt.

Die Aufgabe wird weiterhin durch eine numerische Steuerung mit den Merkmalen des Anspruchs 6 gelöst. Erfindungsgemäß wird eine numerische Steuerung der eingangs genannten Art mit einem erfindungsgemäßen Systemprogramm programmiert, so dass die numerische Steuerung ein erfindungsgemäßes Betriebsverfahren ausführt.

Die Aufgabe wird weiterhin durch eine Produktionsmaschine mit den Merkmalen des Anspruchs 7 gelöst. Erfindungsgemäß ist die numerische Steuerung einer Produktionsmaschine der eingangs genannten Art erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    eine Werkzeugmaschine,
FIG 2    ein Ablaufdiagramm,
FIG 3    einen Pufferspeicher,
FIG 4    ein Zeitdiagramm,
FIG 5    ein Ortsdiagramm und
FIG 6    ein Geschwindigkeitsdiagramm.

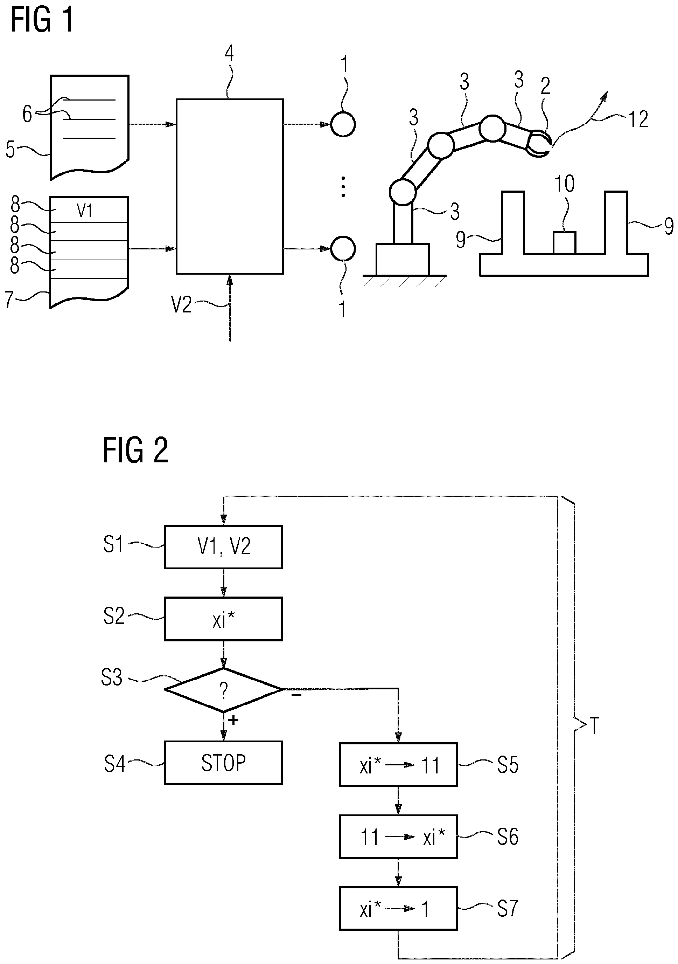

Gemäß FIG 1 weist eine Produktionsmaschine mehrere lagegeregelte Achsen 1 auf. Rein beispielhaft ist in FIG 1 ein Roboter dargestellt. Die Produktionsmaschine könnte aber auch andersartig ausgebildet sein, beispielsweise als Werkzeugmaschine oder als Handhabungsmaschine.

Mittels der lagegeregelten Achsen 1 wird ein Element 2 der Produktionsmaschine verfahren. Die Anzahl an lagegeregelten Achsen 1 kann nach Bedarf sein. Oftmals sind drei bis acht lagegeregelte Achsen 1 vorhanden. Bezüglich der Verfahrbewegung wird in der Regel nur das "eigentlich gewünschte" Element 2 betrachtet, beispielsweise bei dem dargestellten Roboter ein Greifer. Genau genommen müssten auch alle Zwischenglieder 3 mit betrachtet werden, die zur Bewegung des eigentlich gewünschten Elements 2, hier also des Greifers, erforderlich sind.

Die Produktionsmaschine weist weiterhin eine numerische Steuerung 4 auf. Mittels der numerischen Steuerung 4 werden die lagegeregelten Achsen 1 angesteuert und dadurch das Element 2 verfahren. Die numerische Steuerung 4 ist mit einem Systemprogramm 5 programmiert. Das Systemprogramm 5 umfasst Maschinencode 6. Aufgrund der Programmierung der numerischen Steuerung 4 mit dem Systemprogramm 5 arbeitet die numerische Steuerung 4 den Maschinencode 6 ab. Die Abarbeitung des Maschinencodes 6 durch die numerische Steuerung 4 bewirkt, dass die numerische Steuerung 4 ein Betriebsverfahren ausführt, das nachstehend in Verbindung mit FIG 2 näher erläutert wird. Die numerische Steuerung 4 führt das nachstehend erläuterte Betriebsverfahren also unter Abarbeitung des Systemprogramms 5 aus.

Zuerst nimmt die numerische Steuerung 4 in einem Schritt S1 Vorgaben V1, V2 entgegen. In einem Schritt S2 ermittelt die numerische Steuerung 4 mindestens eine Gruppe von Lagesollwerten xi* (mit i = 1, 2, ... n, wobei n die Anzahl an lagegeregelten Achsen 1 ist). Die numerische Steuerung verwertet bei der Ermittlung der Lagesollwerte xi* die Vorgaben V1, V2.

Ein Teil der Vorgaben V1, V2, nämlich die Vorgaben V1, sind der numerischen Steuerung 4 vorab bekannt, d.h. prinzipiell lange Zeit vor der Ansteuerung der lagegeregelten Achsen 1 entsprechend den Vorgaben V1, V2. Beispielsweise kann der numerischen Steuerung 4 ein Teileprogramm 7 (siehe FIG 1) vorgegeben sein und können die Vorgaben V1 durch Befehlssätze 8 des Teileprogramms 7 definiert sein. Die Vorgaben V2 sind hingegen nicht vorbekannt. Sie können jederzeit erfolgen und stehen somit im Ergebnis erst dann fest, wenn die Lagesollwerte xi* ermittelt werden. Die Vorgaben V2 sind also externe Echtzeitereignisse, die der numerischen Steuerung 4 vorab nicht bekannt sind.

Die ermittelten Lagesollwerte xi* können auf ein gemeinsames Koordinatensystem bezogen sein. In diesem Fall müssen eventuell die korrespondierenden Ansteuerwerte für die lagegeregelten Achsen 1 mittels einer kinematischen Transformation ermittelt werden. Alternativ können die Lagesollwerte xi* direkt und unmittelbar die Ansteuerwerte für die einzelnen lagegeregelten Achsen 1 sein.

Es ist möglich, dass die numerische Steuerung 4 im Schritt S1 mehrere Gruppen von Lagesollwerten xi* ermittelt, also eine zeitliche Abfolge von Gruppen von Lagesollwerten xi*. In der Regel ermittelt die numerische Steuerung 4 aber nur eine einzelne Gruppe von Lagesollwerten xi*.

In einem Schritt S3 prüft die numerische Steuerung 4, ob beim Ansteuern der lagegeregelten Achsen 1 mit den im Schritt S2 ermittelten Lagesollwerten xi* die Gefahr einer Kollision besteht. Hierbei wird geprüft, ob die Gefahr einer Kollision mindestens eines durch das Ansteuern der lagegeregelten Achsen 1 bewegten Elements 2, 3 mit einem anderen Element 2, 3, 9, 10 besteht. Es erfolgt also eine umfassende Prüfung aller bewegten Elemente 2, 3 mit allen anderen in Frage kommenden Elementen 2, 3, 9, 10. Beispielsweise wird geprüft, ob das Element 2 mit einem der Zwischenglieder 3, einem feststehenden Element 9 oder beispielsweise auch (sofern unerwünscht) mit einem Werkstück 10 kollidiert. Auch wird bezüglich der der Zwischenglieder 3 geprüft, ob sie mit einem anderen der Zwischenglieder 3, einem feststehenden Element 9 oder beispielsweise mit dem Werkstück 10 kollidieren. Falls auch das Werkstück 10 bewegt wird, wird auch bezüglich des Werkstücks 10 geprüft, ob es mit einem feststehenden Element 9 kollidiert. Die entsprechenden Prüfungen als solche sind Fachleuten allgemein bekannt und müssen daher nicht im Detail erläutert werden. Beispielsweise können die verschiedenen Elemente 2, 3, 9, 10 durch elementargeometrische Körper modelliert werden, deren Bewegung unter Berücksichtigung der kinematischen Wirkungskette entsprechend der Ansteuerung der einzelnen lagegeregelten Achsen 1 modelliert wird.

Wenn die numerische Steuerung 4 im Schritt S3 erkennt, dass die Gefahr einer Kollision besteht, geht die numerische Steuerung 4 zu einem Schritt S4 über. Im Schritt S4 überführt die numerische Steuerung 4 die lagegeregelten Achsen 1 in den Stillstand. Sie stoppt also die Bewegung, um eine Kollision zu vermeiden.

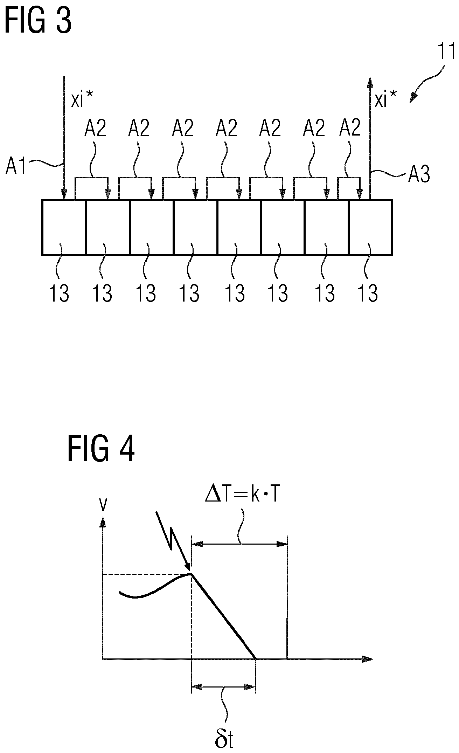

Wenn die numerische Steuerung 4 im Schritt S3 hingegen erkennt, dass keine Gefahr einer Kollision besteht, geht die numerische Steuerung 4 zu einem Schritt S5 über. Im Schritt S5 speichert die numerische Steuerung 4 die im Schritt S2 ermittelten Gruppen von Lagesollwerten xi* entsprechend der Darstellung in FIG 3 in einen Pufferspeicher 11 ein. Weiterhin liest die numerische Steuerung 4 in einem Schritt S6 mindestens eine andere - in der Regel exakt eine andere - Gruppe von Lagesollwerten xi* aus dem Pufferspeicher 11 aus. Bei den ausgelesenen Lagesollwerten xi* handelt es sich also um Lagesollwerte xi*, die zu dem Zeitpunkt, zu dem im Schritt S5 die im Schritt S2 ermittelten Lagesollwerte xi* in den Pufferspeicher 11 eingespeichert werden, bereits im Pufferspeicher 11 gespeichert sind. In einem Schritt S7 steuert die numerische Steuerung 4 sodann die lagegeregelten Achsen 1 entsprechend den im Schritt S6 aus dem Pufferspeicher 11 ausgelesenen Gruppen von Lagesollwerten xi* an. Dadurch wird das Element 2 zu der durch die jeweilige Gruppe von Lagesollwerten xi* bestimmten Position verfahren. Sodann geht die numerische Steuerung 4 zum Schritt S1 zurück. Bei der nächsten Ausführung der Schritte S6 und S7 wird das Element 2 nunmehr zu der durch die neu ausgelesenen Gruppen von Lagesollwerten xil* bestimmten Position verfahren. Durch die Abfolge der ausgelesenen Gruppen von Lagesollwerten xi* wird das Element 2 somit entlang einer Bahn 12 (siehe FIG 1) bewegt. Die Bahn 12 ist durch die Sequenz der Gruppen von Lagesollwerten xi* definiert.

Der Pufferspeicher 11 kann beispielsweise entsprechend der Darstellung in FIG 3 nach Art eines Schieberegisters ausgebildet sein. In diesem Fall wird in die erste Stelle des Schieberegisters 11 jeweils eine neue Gruppe von Lagesollwerten xi* eingespeichert (Schritt S5). Gleichzeitig werden die bereits im Pufferspeicher 11 gespeicherten Gruppen von Lagesollwerten xi* um eine Stelle weiter geschoben. Diejenige Gruppe von Lagesollwerten xi*, die sich an der letzten Stelle des Schieberegisters 11 befindet, wird aus dem Pufferspeicher 11 ausgelesen (Schritt S7). Diese Sachverhalte sind in FIG 3 durch Pfeile A1 bis A3 angedeutet. Alternativ kann der Pufferspeicher 11 beispielsweise nach Art eines Ringpuffers ausgebildet sein. In diesem Fall gelten ähnliche Ausführungen. Auch andere Ausgestaltungen sind dem Fachmann ohne weiteres bekannt. In jedem Fall wird die ausgelesene Gruppe von Lagesollwerten xi* zur Ansteuerung der lagegeregelten Achsen 1 verwendet.

Durch den Pufferspeicher 11 wird erreicht, dass die numerische Steuerung 4 vorab nicht bekannte Echtzeitereignisse (dies entspricht den Vorgaben V2) ausschließlich im Rahmen der Ermittlung der Gruppen von Lagesollwerten xi* berücksichtigt, die in den Pufferspeicher 11 eingespeichert werden, also derjenigen Gruppen von Lagesollwerten xi*, die zu diesem Zeitpunkt noch nicht im Pufferspeicher 11 gespeichert sind. Diejenigen Gruppen von Lagesollwerten xi*, die bereits im Pufferspeicher 11 gespeichert sind, werden hingegen nicht mehr geändert. Sie werden nur noch ausgelesen und zur Ansteuerung der lagegeregelten Achsen 1 verwendet.

Erfindungsgemäß führt die numerische Steuerung 4 ihre gesamte Betriebsweise getaktet aus. Mit jedem Zeittakt T wird also (mindestens) eine neue Gruppe von Lagesollwerten xi* in den Pufferspeicher 11 eingespeichert und wird (mindestens) eine bereits im Pufferspeicher 11 befindliche Gruppe von Lagesollwerten xi* aus dem Pufferspeicher 11 ausgelesen. Der Zeittakt T kann nach Bedarf sein. Beispielsweise kann er bei 4 ms oder 2 ms oder auch 250 μs oder 125 μs liegen. Der Pufferspeicher 11 weist weiterhin eine bestimmte Anzahl k an Speicherplätzen 13 auf, beispielsweise entsprechend der Darstellung in FIG 3 acht Speicherplätze 13. Zwischen dem Einspeichern einer bestimmten Gruppe von Lagesollwerten xi* in den Pufferspeicher 11 und dem Auslesen derselben Gruppe von Lagesollwerten xi* aus dem Pufferspeicher 11 vergeht somit eine Zeitspanne $\Delta T$, während derer die jeweilige Gruppe von Lagesollwerten xi* im Pufferspeicher 11 gespeichert ist. Diese Zeitspanne $\Delta T$ wird nachfolgend als Verweildauer bezeichnet. Die Verweildauer $\Delta T$ ergibt sich als Produkt des Zeittakts T und der Anzahl k an Speicherplätzen 13

des Pufferspeichers 11:

$$\Delta T = kT.$$

Wenn die numerische Steuerung 4 im Schritt S3 die Gefahr einer Kollision erkennt (in FIG 4 durch ein Blitzzeichen angedeutet) und daher vom Schritt S3 zum Schritt S4 übergeht und die lagegeregelten Achsen 1 in den Stillstand überführt, benötigt die Ausführung des Schrittes S4 entsprechend der Darstellung in FIG 4 eine gewisse Zeitspanne $\delta t$. Die Zeitspanne $\delta t$ wird nachfolgend als Anhaltezeit bezeichnet. Vorzugsweise ist die Anhaltezeit $\delta t$ kleiner als die Verweildauer $\Delta T$. Dadurch wird erreicht, dass die numerische Steuerung 4 die lagegeregelten Achsen 1 innerhalb der Verweildauer $\Delta T$ in den Stillstand überführen kann.

Eine derartige Auslegung des Pufferspeichers 11 ist auch ohne weiteres möglich. Wenn beispielsweise die maximal mögliche bzw. zulässige Geschwindigkeit 60 m/min (bzw. 1 m/s) beträgt und im Schritt S4 eine Bremsung mit 20 m/s² durchgeführt werden kann, so werden zum Abbremsen in den Stillstand maximal 50 ms benötigt. Die genannte maximal mögliche bzw. zulässige Geschwindigkeit und die genannte Verzögerung sind typische Werte, auch wenn sie im Einzelfall überschritten oder unterschritten werden können. Bei einem Zeittakt T von 4 ms - ebenfalls ein typischer Wert - erfolgt also ein Überführen in den Stillstand rein rechnerisch während 50ms/4ms = 12,5 Zeittakten T. Da der Pufferspeicher 11 nur ganze Speicherplätze 13 aufweisen kann, muss der Pufferspeicher 11 in diesem Fall somit mindestens dreizehn Speicherplätze 13 aufweisen. Bei einer niedrigeren Geschwindigkeit von beispielsweise 20 m/min (bzw. 33 cm/s) werden in diesem Fall nur 16,7 ms benötigt, was rein rechnerisch 16,7ms/4ms = 4,133 Zeittakten T entspricht. In diesem Fall müsste der Pufferspeicher 11 lediglich mindestens fünf Speicherplätze 13 aufweisen.

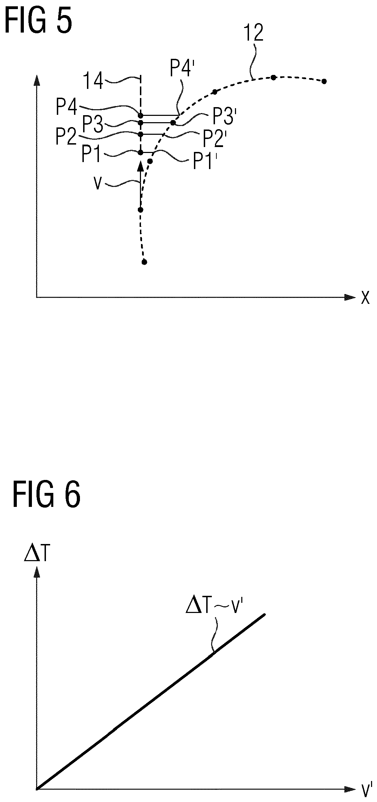

Die entsprechende Auslegung des Pufferspeichers 11 ist insbesondere dann von Vorteil, wenn die numerische Steuerung 4 auch im Falle der Gefahr einer Kollision die Ansteuerung der lagegeregelten Achsen 1 derart koordiniert, dass das von den lagegeregelten Achsen 1 bewegte Element 2 entlang der Bahn 12 bewegt wird, wie sie durch die Gruppen von Lagesollwerten xi* definiert ist, die bereits im Pufferspeicher 11 gespeichert sind. Dies wird nachstehend in Verbindung mit FIG 5 anhand eines einfachen Beispiels näher erläutert. Der nachstehend in Verbindung mit FIG 5 erläuterte Sachverhalt ist aber auch für andere Ausgestaltungen in völlig analoger Weise gültig.

In der Darstellung gemäß FIG 5 ist - rein beispielhaft - angenommen, dass das bewegte Element 2 in einer Ebene entlang einer Kreisbahn bewegt werden soll. Weiterhin ist angenommen, dass mittels je einer der lagegeregelten Achsen 1 ein Verfahren des bewegten Elements 2 in Richtung je einer der beiden in FIG 5 eingezeichneten Koordinatenachsen x, y erfolgt. Die Koordinatenachsen x, y werden nachstehend kurz mit x-Achse und y-Achse bezeichnet. Ausgestaltungen von Produktionsmaschinen, bei denen durch je eine lagegeregelte Achse 1 derartige zueinander orthogonale Verfahrbewegungen bewirkt werden, sind insbesondere bei Werkzeugmaschinen allgemein bekannt. Weiterhin ist angenommen, dass die numerische Steuerung 4 die Gefahr einer Kollision zu einem Zeitpunkt erkennt, zu dem die momentane Geschwindigkeit v des bewegten Elements 2 entsprechend der Darstellung in FIG 5 parallel zur y-Achse verläuft. Zu diesem Zeitpunkt erfolgt momentan also ausschließlich eine Bewegung des bewegten Elements 2 in Richtung der y-Achse.

Wenn bei diesem Sachverhalt eine Kollision erkannt wird, werden üblicherweise alle lagegeregelten Achsen 1 unabhängig voneinander so schnell wie möglich abgebremst. Da in dem gegebenen Beispiel zu dem gegebenen Zeitpunkt ausschließlich die lagegeregelte Achse 1 für die Bewegung in Richtung der y-Achse einen von 0 verschiedenen Geschwindigkeitswert aufweist, wird nur diese eine lagegeregelte Achse 1 abgebremst. Bei allen anderen lagegeregelten Achsen 1 ist dies nicht erforderlich, da sie bereits stehen.

Wenn nun zum Überführen der lagegeregelten Achse 1 für die Bewegung in Richtung der y-Achse vier Zeittakte T erforderlich sind, wird das Element 2 im Schritt S4 entlang einer Bahn 14 bewegt. Die Bahn 14 mit ihren zugehörigen Bahnpunkten P1 bis P4 verläuft gemäß obigem konkretem Beispiel parallel zur y-Achse. Dies ist aber nur rein zufällig der Fall. Entscheidend ist, dass die Bahn 14 von der Bahn 12 abweicht, wie sie durch die Lagesollwerte xi* definiert ist, die bereits im Pufferspeicher 11 gespeichert sind, im vorliegenden Fall also von der Kreisbahn.

Gemäß der vorteilhaften Ausgestaltung bremst die lagegeregelte Achse 1 für die Bewegung in Richtung der y-Achse wie zuvor beschrieben ab. Der Vorgang für die lagegeregelte Achse 1 für die Bewegung in Richtung der y-Achse ist also derselbe wie beim Bremsen auf der Bahn 14. Im Unterschied zur üblichen Vorgehensweise ermittelt die numerische Steuerung 4 jedoch im Rahmen der vorteilhaften Ausgestaltung auch für die lagegeregelte Achse 1 für die Bewegung in Richtung der x-Achse zugehörige Ansteuerwerte, so dass das Element 2 auf der Kreisbahn bzw. allgemein der Bahn 12 bewegt wird. Anstelle der Bahnpunkte P1 bis P4 wird das Element 2 also während der zum Stoppen erforderlichen Zeittakte T zu modifizierten Bahnpunkten P1' bis P4' bewegt. Am modifizierten Bahnpunkt P4' kommt in dem gewählten Beispiel das Element 2 zum Stehen. Der Vorteil ist, dass auch beim Stoppen der Bewegung des Elements 2 das Anhalten auf der Bahn 12 erfolgt, für welche die Gefahr einer Kollision nicht besteht.

Die erfindungsgemäße bevorzugte Vorgehensweise wurde obenstehend anhand eines einfachen Beispiels erläutert. Sie ist aber in analoger Weise auch bei anderen Konstellationen der Bahn 12 realisierbar.

Es ist möglich, dass die Verweildauer ΔT eine Konstante ist. Alternativ ist es entsprechend der Darstellung in FIG 6 möglich, dass die numerische Steuerung 4 die Verweildauer ΔT in Abhängigkeit von der Verfahrgeschwindigkeit v' mindestens einer der lagegeregelten Achsen 1 dynamisch einstellt. Insbesondere kann eine entsprechende Anpassung der Anzahl k an Speicherplätzen 13 des Pufferspeichers 11 erfolgen. Bei der Verfahrgeschwindigkeit v' kann es sich beispielsweise um die Verfahrgeschwindigkeit derjenigen lagegeregelten Achse 1 handeln, welche die größte Zeit zum Anhalten benötigt. Alternativ kann es sich um eine aus der Gesamtheit der Verfahrgeschwindigkeiten der lagegeregelten Achsen 1 insgesamt abgeleitete Verfahrgeschwindigkeit handeln, insbesondere um die Verfahrgeschwindigkeit v, mit welcher das bewegte Element 2 verfahren wird.

Zusammengefasst betrifft die vorliegende Erfindung somit folgenden Sachverhalt:

Eine numerische Steuerung 4 arbeitet ein Systemprogramm 5 ab. Hierbei ermittelt sie unter Verwertung von Vorgaben V1, V2 iterativ jeweils mindestens eine Gruppe von Lagesollwerten xi* für lagegeregelte Achsen 1 einer von der numerischen Steuerung 4 gesteuerten Produktionsmaschine. Sie prüft jeweils, ob beim Ansteuern der lagegeregelten Achsen 1 mit den ermittelten Gruppen von Lagesollwerten xi* die Gefahr einer Kollision mindestens eines durch das Ansteuern der lagegeregelten Achsen 1 bewegten Elements 2, 3 mit mindestens einem anderen Element 2, 3, 9, 10 besteht. Besteht keine solche Gefahr, speichert die numerische Steuerung 4 die mindestens eine Gruppe von Lagesollwerten xi* in einen Pufferspeicher 11 ein, liest mindestens eine andere, bereits im Pufferspeicher 11 gespeicherte Gruppe von Lagesollwerten xi* aus dem Pufferspeicher 11 aus und steuert die lagegeregelten Achsen 1 entsprechend der mindestens einen aus dem Pufferspeicher 11 ausgelesenen Gruppe von Lagesollwerten xi* an. Diese Vorgehensweise setzt sie fort, solange keine Gefahr einer Kollision besteht. Dadurch wird das von den lagegeregelten Achsen 1 bewegte Element 2 entlang einer durch die Sequenz der Gruppen von Lagesollwerten xi* definierten Bahn 12 bewegt. Wenn die Gefahr einer Kollision besteht, überführt die numerische Steuerung 4 die lagegeregelten Achsen 1 in den Stillstand. Die numerische Steuerung 4 berücksichtigt vorab nicht bekannte externe Echtzeitereignisse V2 ausschließlich im Rahmen der Ermittlung der in den Pufferspeicher 11 einzuspeichernden Gruppen von Lagesollwerten xi*. Die im Pufferspeicher 11 bereits gespeicherten Gruppen von Lagesollwerten xi* ändert sie hingegen nicht mehr.

Die vorliegende Erfindung weist viele Vorteile auf. So kann beispielsweise die Kollisionsprüfung auf eine Prüfung im sogenannten Hauptlauf reduziert werden. Eine zusätzliche Prüfung auch im sogenannten Vorlauf kann entfallen. Dennoch kann in nahezu allen Fällen ein zuverlässiges Anhalten der Produktionsmaschine ohne die Gefahr einer Kollision erreicht werden. Dies gilt insbesondere, wenn auch bei einem Stoppen der Produktionsmaschine (Schritt S4) die Bahn 12, wie sie durch die im Pufferspeicher 11 gespeicherten Gruppen von Lagesollwerten xi* definiert ist, beibehalten wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der folgenden Ansprüche zu verlassen.

**Patentansprüche**

1. Betriebsverfahren für eine numerische Steuerung (4), wobei die numerische Steuerung (4) ein Systemprogramm (5) abarbeitet, wobei die numerische Steuerung (4) unter Abarbeitung des Systemprogramms (5)

   a) unter Verwertung von Vorgaben (V1, V2) mindestens eine Gruppe von Lagesollwerten (xi*) für lagegeregelte Achsen (1) einer von der numerischen Steuerung (4) gesteuerten Produktionsmaschine ermittelt, wobei die Vorgaben sowohl der numerischen Steuerung (4) vorab bekannte, insbesondere durch Befehlssätze eines Teileprogrammes definierte Vorgaben (V1) als auch externe, der numerischen Steuerung (4) vorab nicht bekannte Echtzeitereignisse (V2) umfassen,
   b) prüft, ob beim Ansteuern der lagegeregelten Achsen (1) mit den ermittelten Gruppen von Lagesollwerten (xi*) die Gefahr einer Kollision mindestens eines durch das Ansteuern der lagegeregelten Achsen (1) bewegten Elements (2, 3) mit mindestens einem anderen Element (2, 3, 9, 10) besteht,
   c) dann, wenn keine Gefahr einer Kollision besteht, die mindestens eine Gruppe von Lagesollwerten (xi*) in einen Pufferspeicher (11) einspeichert und mindestens eine andere, bereits im Pufferspeicher (11) gespeicherte Gruppe von Lagesollwerten (xi*) aus dem Pufferspeicher (11) ausliest und die lagegeregelten Achsen (1) entsprechend der mindestens einen aus dem Pufferspeicher (11) ausgelesenen Gruppe von Lagesollwerten (xi*) ansteuert und das Betriebsverfahren mit Schritt a) fortsetzt, so dass das von den lagegeregelten Achsen (1) bewegte Element (2) entlang einer durch die Sequenz der Gruppen von Lagesollwerten (xi*) definierten Bahn (12) bewegt wird, und
   d) dann, wenn die Gefahr einer Kollision besteht, die lagegeregelten Achsen (1) in den Stillstand überführt,

   so dass die numerische Steuerung (4) die externen, der numerischen Steuerung (4) vorab nicht bekannten Echtzeitereignisse (V2) ausschließlich im Rahmen der Ermittlung der in den Pufferspeicher (11) einzuspeichernden Gruppen von Lagesollwerten (xi*) berücksichtigt, die im Pufferspeicher (11) bereits gespeicherten Gruppen von Lagesollwerten (xi*) hingegen nicht mehr ändert,
   wobei die numerische Steuerung (4) ihre gesamte Betriebsweise getaktet ausführt,
   wobei mit jedem Zeittakt mindestens eine neue Gruppe von Lagesollwerten (xi*) in den Pufferspeicher eingespeichert und mindestens eine bereits im Pufferspeicher befindliche Gruppe von Lagesollwerten (xi*) aus dem Pufferspeicher ausgelesen wird,
   wobei zwischen einem jeweiligen Einschreibezeitpunkt, zu dem eine jeweilige Gruppe von Lagesollwerten (xi*) in den Pufferspeicher eingespeichert wird, und einem jeweiligen Auslesezeitpunkt, zu dem dieselbe Gruppe von Lagesollwerten (xi*) aus dem Pufferspeicher ausgelesen wird, eine Verweildauer, während derer die jeweilige Gruppe von Lagesollwerten (xi*) im Pufferspeicher gespeichert ist, liegt und wobei während der Verweildauer im Pufferspeicher die jeweilige Gruppe von Lagesollwerten (xi*) nicht mehr geändert wird.

2. Betriebsverfahren nach Anspruch 1,
   **dadurch gekennzeichnet,**
   **dass** die numerische Steuerung (4) eine Verweildauer ($\Delta T$), während derer die jeweilige Gruppe von Lagesollwerten (xi*) im Pufferspeicher (11) gespeichert ist, in Abhängigkeit von einer Verfahrgeschwindigkeit (v') mindestens einer der lagegeregelten Achsen (1) dynamisch einstellt.

3. Betriebsverfahren nach Anspruch 1 oder 2,
   **dadurch gekennzeichnet,**
   **dass** eine Verweildauer ($\Delta T$), während derer die jeweilige Gruppe von Lagesollwerten (xi*) im Pufferspeicher (11) gespeichert ist, derart bemessen ist, dass die numerische Steuerung (4) in der Lage ist, die lagegeregelten Achsen (1) innerhalb der Verweildauer ($\Delta T$) in den Stillstand zu überführen.

4. Betriebsverfahren nach Anspruch 1, 2 oder 3,
   **dadurch gekennzeichnet,**
   **dass** die numerische Steuerung (4) dann, wenn die Gefahr einer Kollision besteht, eine Ansteuerung der lagegeregelten Achsen (1) derart koordiniert, dass das von den lagegeregelten Achsen (1) bewegte Element (2) entlang der durch die Sequenz der bereits im Pufferspeicher (11) gespeicherten Gruppen von Lagesollwerten (xi*) definierten Bahn (12) in den Stillstand überführt.

5. Systemprogramm für eine numerische Steuerung (4), wobei das Systemprogramm Maschinencode (6) umfasst, der von der numerischen Steuerung (4) abarbeitbar ist, wobei die Abarbeitung des Maschinencodes (6) durch die numerische Steuerung (4) bewirkt, dass die numerische Steuerung (4) ein Betriebsverfahren nach einem der obigen Ansprüche ausführt.

6. Numerische Steuerung, wobei die numerische Steuerung mit einem Systemprogramm (5) nach Anspruch 5 programmiert ist, so dass die numerische Steuerung ein Betriebsverfahren nach einem der Ansprüche 1 bis 4 ausführt.

7. Produktionsmaschine,

   - wobei die Produktionsmaschine mehrere lagegeregelte Achsen (1) aufweist, mittels derer mindestens ein Element (2, 3) der Produktionsmaschine verfahrbar ist,
   - wobei die Produktionsmaschine eine numerische Steuerung (4) nach Anspruch 6 aufweist, von der die lagegeregelten Achsen (1) angesteuert werden.

**Claims**

1. Operating method for a numerical control system (4) wherein the numerical control system (4) executes a system program (5), wherein the numerical control system (4), while executing the system program (5),

   a) while evaluating presets (V1, V2), determines at least one group of position setpoint values (xi*) for position-controlled axes (1) of a production machine controlled by the numerical control system (4), wherein the presets comprise both defined presets (V1) previously known to the numerical control system (4), in particular defined by command sets of a parts program, and external real time events (V2) previously unknown to the numerical control system (4),
   b) checks whether, during activation of the position-controlled axes (1) with the determined groups of position setpoint values (xi*), the risk of a collision of at least one element (2, 3) moved by the activation of the position-controlled axes (1) with at least one other element (2, 3, 9, 10) exists,
   c) if no risk of a collision exists, stores the at least one group of position setpoint values (xi*) in a buffer store (11) and reads out from the buffer store (11) at least one other group of position setpoint values (xi*) already stored in the buffer store (11) and activates the position-controlled axes (1) according to the at least one group of position setpoint values (xi*) read out from the buffer store (11) and continues the operating method at step a) so that the element (2) moved by the position-controlled axes (1) is moved along a path (12) defined by the sequence of the groups of position setpoint values (xi*), and
   d) if the risk of a collision exists, brings the position-controlled axes (1) to a standstill,
   so that the numerical control system (4) takes account of the external real time events (V2) previously unknown to the numerical control system (4) exclusively in the context of the determination of the groups of position setpoint values (xi*) which are to be stored in the buffer store (11), but no longer alters the groups of position setpoint values (xi*) already stored in the buffer store (11),
   wherein the numerical control system (4) executes its entire operating method in a clocked manner,
   wherein, with each time interval, at least one new group of position setpoint values (xi*) is stored in the buffer store and at least one group of setpoint values (xi*) already stored in the buffer store are read out of the buffer store,
   wherein, between a respective writing time point at which a respective group of position setpoint values (xi*) is stored in the buffer store and a respective readout time point at which the same group of position setpoint values is read out of the buffer store, there is a dwell time during which the respective group of position setpoint values (xi*) is stored in the buffer store and wherein during the dwell time in the buffer store the respective group of position setpoint values (xi*) is longer changed.

2. Operating method according to claim 1, **characterised in that** the numerical control system (4) dynamically sets a dwell time ($\Delta T$) during which the respective group of position setpoint values (xi*) is stored in the buffer store (11) dependent upon a travel velocity (v') of at least one of the position-controlled axes (1).

3. Operating method according to claim 1 or 2, **characterised in that** a dwell time ($\Delta T$) during which the respective group of position setpoint values (xi*) is stored in the buffer store (11) is dimensioned such that the numerical control system (4) is able to bring the position-controlled axes (1) to a standstill within the dwell time ($\Delta T$).

4. Operating method according to claim 1, 2 or 3, **characterised in that** when the risk of a collision exists, the numerical control system (4) coordinates an activation of the position-controlled axes (1) such that the element (2) moved by the position-controlled axes (1) is brought to a standstill along the path (12) defined by the sequence of the groups of position setpoint values (xi*) already stored in the buffer store (11).

5. System program for a numerical control system (4), wherein the system program comprises machine code (6) that is configured to be executed by the numerical control system (4), wherein the execution of the machine code (6) by the numerical control system (4) causes the numerical control system (4) to perform an operating method according to one of the above claims.

6. Numerical control system, wherein the numerical control system is programmed with a system program (5) according to claim 5, so that the numerical control system carries out an operating method according to one of claims 1 to 4.

7. Production machine,

 - wherein the production machine has a plurality of position-controlled axes (1), by means of which at least one element (2, 3) of the production machine is movable,
 - wherein the production machine has a numerical control system (4) according to claim 6, by which the position-controlled axes (1) are activated.

**Revendications**

1. Procédé pour faire fonctionner une commande (4) numérique, dans lequel la commande (4) numérique élabore un programme (5) de système, dans lequel la commande (4) numérique, en élaborant le programme (5) de système,

 a) détermine, en évaluant des prescriptions (V1, V2), au moins un groupe de valeurs (xi*) de consigne de position pour des axes (1) régulés en position d'une machine de production commandée par la commande (4) numérique, dans lequel les prescriptions comprennent à la fois des prescriptions (V1) connues à l'avance de la commande (4) numérique, notamment définies par des ensembles d'instructions d'un programme partiel, et également des événements (V2) en temps réel, extérieurs, inconnus à l'avance de la commande (4) numérique,
 b) contrôle si, lors de la commande des axes (1) régulés en position par des groupes déterminés de valeurs (xi*) de consigne de position, il existe le danger d'une collision avec au moins un autre élément (2, 3, 9, 10) d'au moins un élément (2, 3) mis en mouvement par la commande des axes (1) régulés en position,
 c) s'il n'y a pas de danger d'une collision, met le au moins un groupe de valeurs (xi*) de consigne de position dans une mémoire (11) tampon et lit dans la mémoire (11) tampon au moins un autre groupe de valeurs (xi*) de consigne de position mis déjà dans la mémoire (11) tampon, et commande les axes (1) régulés en position, conformément au au moins un groupe de valeurs (xi*) de consigne de position dans la mémoire (11) tampon et poursuit le procédé de fonctionnement par le stade a), de manière à ce que l'élément (2), mis en mouvement par les axes (1) régulés en position, soit mis en mouvement le long d'une trajectoire (12) définie par la séquence des groupes de valeurs (xi*) de consigne de position, et
 d) s'il y a danger d'une collision, on met les axes (1) régulés en position à l'état de repos,
 de manière à ce que la commande (4) numérique prenne en compte les événements (V2) en temps réel extérieurs, inconnus auparavant de la commande (4) numérique, exclusivement dans le cadre de la détermination des groupes de valeurs (xi*) de consigne de position mis dans la mémoire (11) tampon, mais ne modifie plus les groupes de valeurs (xi*) de consigne de position déjà mis dans la mémoire (11) tampon,
 dans lequel la commande (4) numérique effectue toute sa façon de fonctionner de manière cyclique,
 dans lequel, à chaque cycle, au moins un groupe nouveau de valeurs (xi*) de consigne de position est mis dans la mémoire tampon, et au moins un groupe de valeurs (xi*) de consigne de position se trouvant déjà dans la mémoire tampon est lu dans la mémoire tampon, dans lequel, entre un instant respectif d'inscription où on met un groupe respectif de valeurs (xi*) de consigne de position dans la mémoire tampon et un instant respectif de lecture où on lit dans la mémoire tampon le même groupe de valeurs (xi*) de consigne de position, il y a une durée de séjour, pendant laquelle le groupe respectif de valeurs (xi*) de consigne de position est dans la mémoire tampon, et
 dans lequel, pendant la durée de séjour dans la mémoire tampon, on ne modifie plus le groupe respectif de valeurs (xi*) de consigne de position.

2. Procédé suivant la revendication 1,
 **caractérisé**
 **en ce que** la commande (4) numérique règle dynamiquement, en fonction d'une vitesse (v') de déplacement d'au moins l'un des axes (1) régulés en position, une durée ($\Delta T$) de séjour, pendant laquelle le groupe respectif de valeurs (xi*) de consigne de position, est dans la mémoire (11) tampon.

3. Procédé suivant la revendication 1 ou 2, **caractérisé en ce qu'**une durée ($\Delta$T) de séjour, pendant laquelle le groupe respectif de valeurs (xi*) de consigne de position est dans la mémoire (11) tampon, est telle que la commande (4) numérique est en mesure de faire passer à l'état de repos les axes (1) régulés en position dans la durée ($\Delta$T) de séjour.

4. Procédé suivant la revendication 1, 2 ou 3, **caractérisé en ce que** la commande (4) numérique, lorsque le danger d'une collision existe, coordonne une commande des axes (1) régulés en position, de manière à ce que l'élément (2) mis en mouvement par des axes (1) régulés en position passe à l'état de repos, le long de la trajectoire (12) définie par la séquence des groupes de valeurs (xi*) de consigne de position mis déjà dans la mémoire (11) tampon.

5. Programme de système d'une commande (4) numérique, dans lequel le programme de système comprend un code machine (6), qui peut être élaboré par la commande (4) numérique, dans lequel l'élaboration du code machine (6) par la commande (4) numérique fait que la commande (4) numérique effectue un procédé de fonctionnement suivant l'une des revendications précédentes.

6. Commande numérique, dans laquelle la commande numérique est programmée par un programme (5) de système suivant la revendication 5, de manière à ce que la commande numérique effectue un procédé de fonctionnement suivant l'une des revendications 1 à 4.

7. Machine de production,

- dans laquelle la machine de production a plusieurs axes (1) régulés en position aux moyens desquels au moins un élément (2, 3) de la machine de production peut être déplacé,
- dans laquelle la machine de production a une commande (4) numérique suivant la revendication 6, par laquelle les axes (1) régulés en position sont commandés.

# FIG 1

# FIG 2

## FIG 3

## FIG 4

$$\Delta T = k \cdot T$$

$$\delta t$$

FIG 5

FIG 6

**IN DER BESCHREIBUNG AUFGEFÜHRTE DOKUMENTE**

**In der Beschreibung aufgeführte Patentdokumente**

- EP 2919081 A1

- EP 1901150 A1